# EUROPEAN PATENT APPLICATION

(11) **EP 1 411 524 A1**
(43) Date of publication of application: **21.04.2004**
(21) Application number: 03256521.0
(22) Date of filing: 16.10.2003
(51) Int. Cl.: G11B 33/12, G11B 5/53

(54) **Head drum assembly**

(30) Priority: 16.10.2002 KR 2002063070; 26.12.2002 KR 2002084575; 31.12.2002 KR 2002088235
(71) Applicant: SAMSUNG ELECTRONICS CO., LTD., Suwon-City, Kyungki-do (KR)
(72) Inventor: Baik, Chung-hum 832-2002 Jugong Apartment, Suwon-city Gyunggi-do (KR); Kang, Tae-gil 301-103 Daewoo Apartment, Suwon-city Gyunggi-do (KR); Hong, Sung-hee, Suwon-city Gyunggi-do (KR); Choi, Do-Young 715-1801 Hyundai Seongwoo Apartment, Suwon-city Gyunggi-do (KR)
(74) Representative: Geary, Stuart Lloyd

(57) **Abstract**

A head drum assembly for a compact digital camcorder comprises a drum cover 230, stationary and rotating drums 220, 110 mounted onto a shaft 240. The drum cover supports a circuit board 253. Stationary and rotary transformers 251, 252, disposed between the stationary drum and the rotary drum, transmit signals between the magnetic head and the circuit board. The drum cover 230 is formed of a conductive material, and a connecting member 1002 is disposed to support the circuit board 253 on the drum cover and to connect electrically the circuit board and the drum cover. A motor stator 270 is mounted with the stationary drum, and a motor rotor 260 mounted with the rotary drum. The motor stator 270 has first and second substrates 261, 262, and each of a torque generation coil pattern, a frequency generation coil pattern and a phase generation coil pattern is formed on one or both of the substrates. The rotary drum 210 supports a magnetic head 1001. A rotary transformer 252 is disposed on the rotary drum. The rotary drum has a linking hole 215 penetrating therethrough, and a coil (1000 of the rotary transformer extends through the linking hole and is directly connected to the magnetic head by soldering.

## Description

A first aspect of the invention relates to a head drum assembly for a tape recorder, the assembly comprising: a rotary drum supporting a magnetic head and rotatable on a shaft; a stationary drum and a drum cover secured to the shaft on opposite sides of the rotary drum, the drum cover supporting a circuit board; a stationary transformer and a rotary transformer, disposed between the stationary drum and the rotary drum, for transmitting signals between the magnetic head and the circuit board.

A second aspect of the invention relates to a head drum assembly for a tape recorder, the assembly comprising: a rotary drum supporting a magnetic head thereon and being rotatable on a shaft; and a rotary transformer disposed on the rotary drum.

A third aspect of the invention relates to a head drum assembly for a tape recorder, comprising: a rotary drum and a stationary drum secured onto a shaft; and a motor stator mounted with the stationary drum; and a motor rotor mounted with the rotary drum.

Generally, a tape recorder deck in a tape recorder, such as a compact digital camcorder or a video cassette recorder (VCR), includes a head drum assembly having a magnetic head rotatable at high speed, to allow the scanning of magnetic tape and thus record video data thereon and/or reproduce video data therefrom.

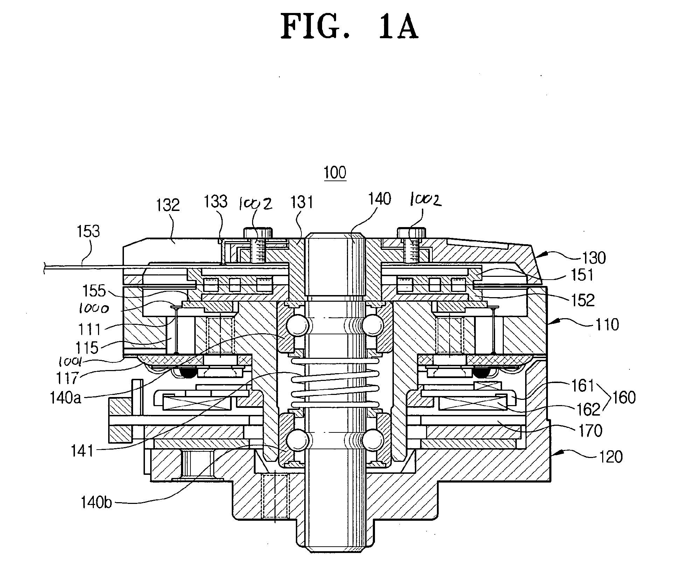

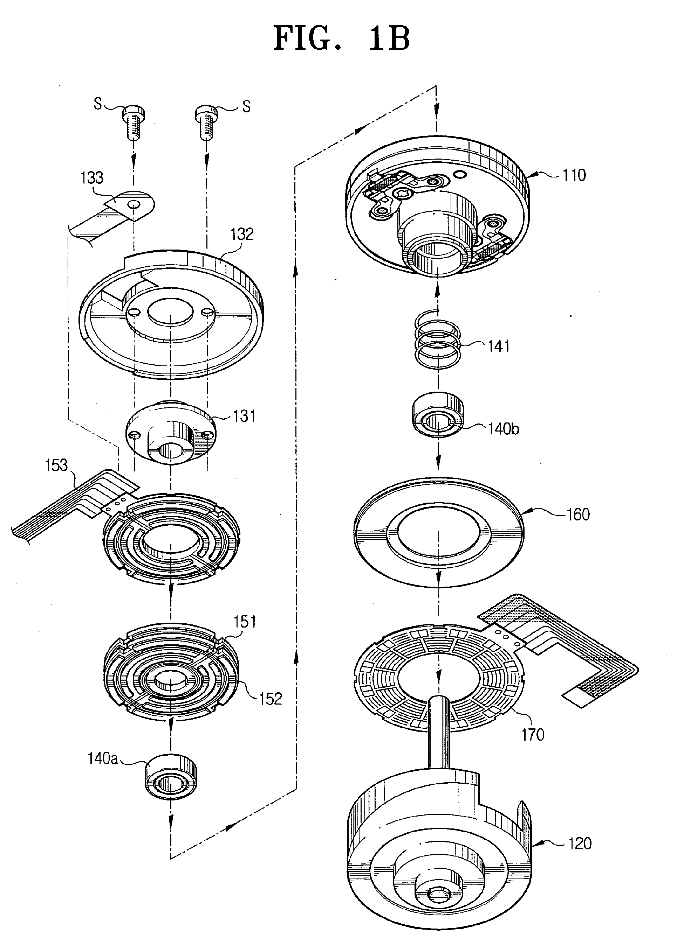

Referring to Figures 1A and 1B, a conventional head drum assembly 100 for a tape recorder includes a rotary drum 110, a stationary drum 120 and a drum cover 130. The rotary drum 110 supports a magnetic head 1001, which scans a moving magnetic tape (not shown) to record/reproduce video data thereon/therefrom, and is rotatably mounted on the shaft 140. The stationary drum 120 and the drum cover 130 are press-fitted on the lower and the upper parts of the shaft 140, respectively, with the rotary drum 110 interposed therebetween.

The drum cover 130 includes a conductive bushing member 131 in a form of a flange which is press-fitted in the shaft 140 above the rotary drum 110, a cover member 132 formed by a resin melding and joined with the bushing member 131 by a pair of screws 1002, and a conductive earth plate 133 supported by one of the screws 1002 to be exposed through the upper surface of the cover member 132 and to be electrically connected to the sub circuit board 153. Bearings 140a and 140b are preloaded by an elastic member 141.

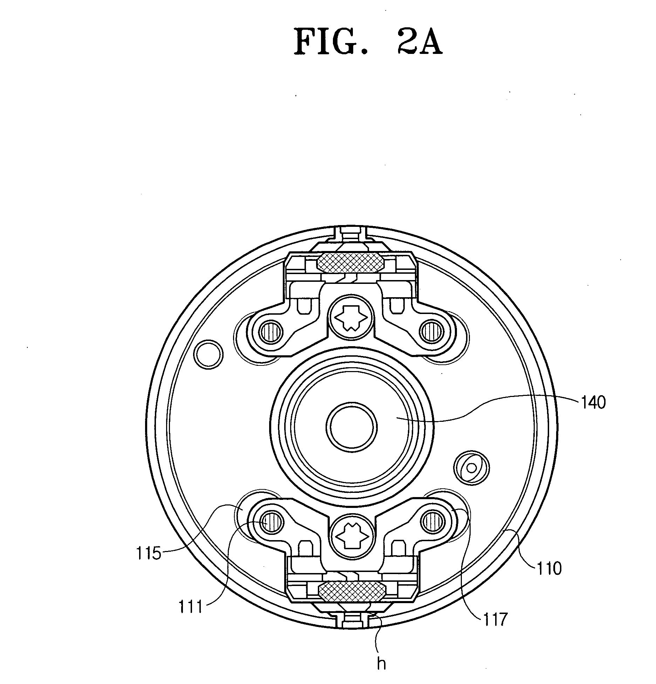

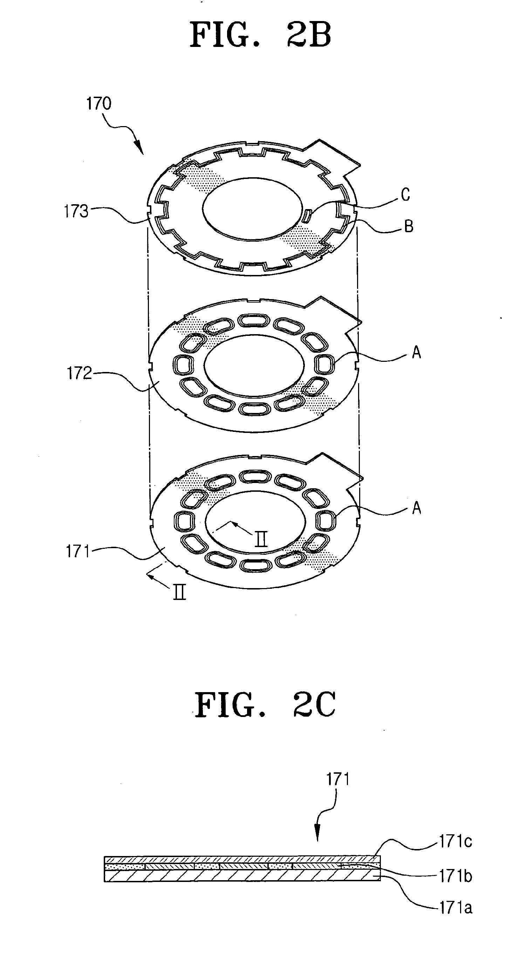

Between the drum cover 130 and the rotary drum 110, a rotary transformer 152 and a stationary transformer 151 facing face each other to transmit signals recorded/reproduced on/from tape by the magnetic head 1001. Because direct soldering is not easy, a terminal 155 is preferably interconnected between the magnetic head 1001 and the coil 1000 of the rotary transformer 152 to act as a medium when connecting them by soldering, . Accordingly, in order to enable easy soldering of the coil 1000, terminal 155 is first attached to the lower part of the rotary transformer 152. Next, a hole 115 is defined in the rotary drum 110, and the upper part of the terminal pin 111 is attached to the terminal 115. Next, one end of the coil 1000 is soldered to the connecting area between the terminal 155 and the terminal pin 111. As shown in Figure 2A, the lower end of the terminal pin 111 is soldered to a fine patter coil (FPC) 117 which is disposed at the lower part of the rotary drum 110. The FPC 117 is connected to the magnetic head 1001 by soldering.

A motor rotor 160 having a donut-shaped magnet 162 disposed within a ring-type rotor casing 161 thereof is provided below the rotary drum 110. A motor stator 170 is mounted above the stationary drum 120. The motor stator 170 is of the type in which a so-called FP coil (fine pattern coil) is formed into a disc pattern to face the doughnut-type magnet 162, to obtain a compact head drum assembly 100. Such motor stator 170 usually has the three-layered stacked structure consisting of first substrate 171, a second substrate 172 and a third substrate 17.

The motor stator 170 includes a torque generation coil pattern (A) formed on both the first and second substrates 171, 172, and a frequency generation coil pattern (B) for speed control and a phase generation coil pattern (C) for phase control formed on the third substrate 173.

As shown in Figure 2C, the first substrate 171 is formed of a structure in which a copper membrane 171b in a fine pattern is formed on an epoxy substrate 171a, serving as a base plate, and a protective layer 171c is formed thereon. The second and third substrates 172 and 173 are formed in the same way.

In the above head drum assembly 100, the rotary drum 110 is rotated by the electromagnetic interaction between the motor rotor 160 and the motor stator 170. As the rotary drum 110 is rotated, the magnetic head 1001 mounted in the rotary drum 110 is also rotated, thereby scanning the tape and recording/reproducing data on/from the magnetic tape. The data obtained from the scanning of the magnetic head 1001 is transmitted to the rotary transformer 152 and the stationary transformer 151 via the terminal pin 111 and the coil 1000, and then to the camcorder system via the sub circuit board 153, which is connected to the stationary transformer 151. The data is then processed at the camcorder system.

The first aspect of the invention is characterised in that the drum cover is formed of a conductive material, and a connecting member is disposed to support the circuit board on the drum cover and to connect electrically the circuit board and the drum cover.

Thus, the conductive bushing members and earth plate which are respectively provided to the insulating drum cover of the conventional arrangement, can be replaced by a single conductive drum cover. Accordingly, the number of necessary parts and manufacturing steps can be reduced, potentially resulting in decreased manufacturing costs and improved yield.

The second aspect of the invention is characterised in that the rotary drum has a linking hole penetrating therethrough, and a coil of the rotary transformer extends through the linking hole and is directly connected to the magnetic head by soldering.

Because the coil is directly connected to the magnetic head, some conventional parts can be omitted, potentially resulting in a decrease in the number of manufacturing steps. The arrangement can result in an increased signal transmission rate, due to direct connection between the coil and the magnetic head, and thus a potential performance improvement.

The third aspect of the invention is characterised in that the motor stator has first and second substrates, and each of a torque generation coil pattern, a frequency generation coil pattern and a phase generation coil pattern is formed on one or both of the substrates.

Since this allows one of the conventional layers to be omitted, the number of parts can be reduced, with a corresponding decrease in manufacturing costs.
Additionally, because there is the potential to shorten the process of forming copper pattern on the respective substrate layers, productivity might be increased.

Embodiments of the present invention will now be described, by way of example only, with reference to the attached drawings, in which:
Figure 1A is a schematic sectional view of a conventional head drum assembly;
Figure 1B is an exploded perspective view of the assembly of Figure 1A;
Figure 2A is a bottom view illustrating a rotary drum forming part of the assembly of Figure 1A;
Figure 2B is a schematic perspective view illustrating a motor stator forming part of the assembly Figure 1A in an exploded view;
Figure 2C is a schematic sectional view taken on line II-II of Figure 2B;
Figure 3A is a schematic sectional view illustrating one embodiment of a head drum assembly according to the invention;
Figure 3B is an exploded perspective view of the head drum assembly of Figure 3A;
Figure 4A is a bottom view of a rotary drum forming part of the assembly of Figure 3A;
Figure 4B is a schematic perspective view illustrating a motor stator forming part of the assembly of Figure 3A in an exploded vies; and
Figure 4C is a schematic sectional view taken on line IV-IV of Figure 4B.

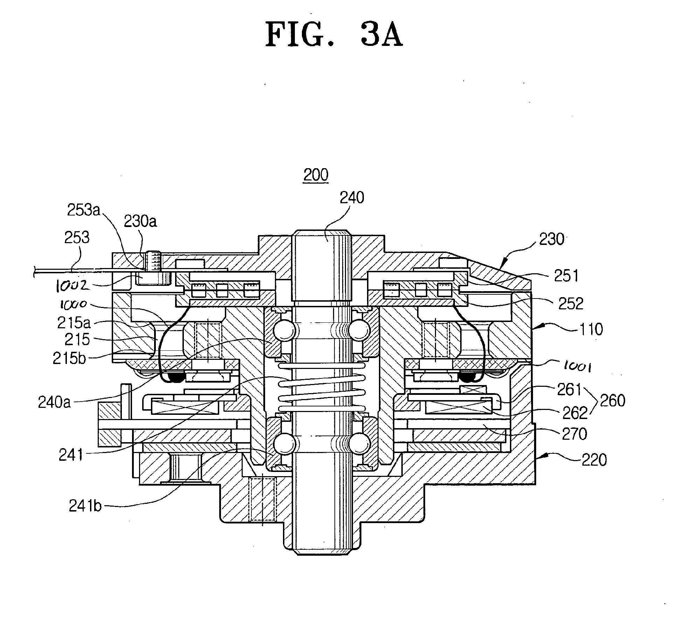

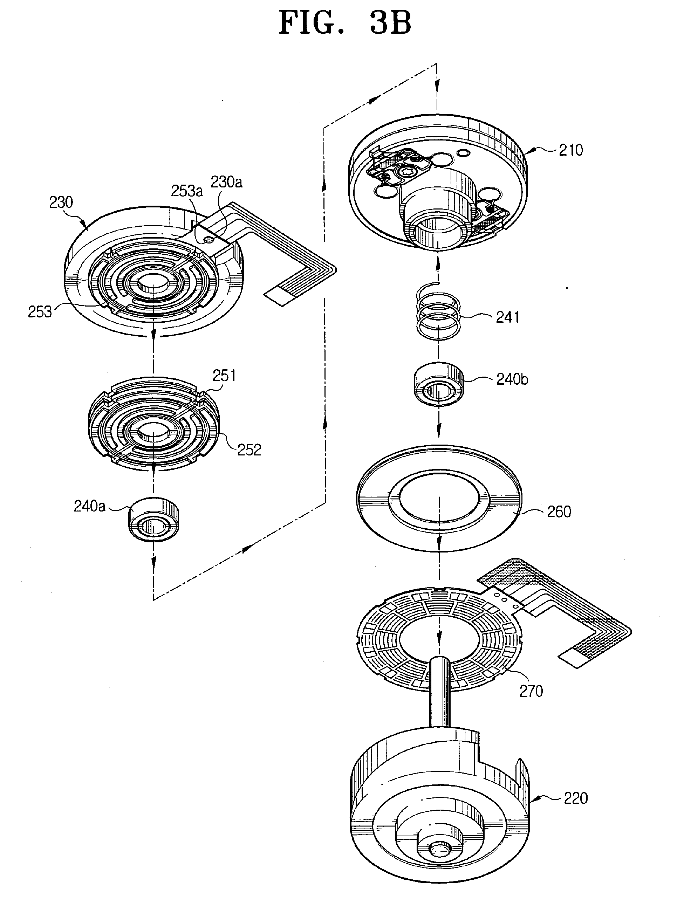

Referring to Figures 3A and 3B, a head drum assembly 200 for a tape recorder according to the invention includes a rotary drum 210 which supports a magnetic head 1001 thereon to scan and thus record and reproduce data on or from a magnetic tape (not shown). A stationary drum 220 and a drum cover 230 are press-fitted on lower and upper parts of a shaft 240, respectively, with the rotary drum 210 interposed therebetween. The shaft 240 is disposed in a centre axis hole of the rotary drum 210.

The shaft 240 is press-fitted in a shaft hole defined in the drum cover 230. The drum cover 230 can be formed by shaping a conductive material, such as an aluminium alloy. The drum cover 230 preferably is made of the same material as that of the rotary drum 210 and the stationary drum 220.

The drum cover 230 and the sub circuit board 253 are provided with corresponding connecting holes 230a, 253a. Accordingly, as the screw 1002 is fastened into the connecting holes 230a, 253a, the drum cover 230 and the sub circuit board 253 are electrically connected as well as being mechanically secured together. Because the drum cover 230 is formed of a conductive material, and because the drum cover 230 and the sub circuit board 253 can be electrically connected simply by the screw 1002, and the drum cover 230 itself can be allowed to function as an earth plate.

The separate conductive bushing member and earth plate, required in the conventional drum cover 230, can be omitted, and the number of screws 1002 is also reduced. As a result, the conductive drum cover 230 can be provided as one simple element.

A stationary transformer 251 is provided in the lower part of the drum cover 230, facing a rotary transformer 252 provided in an upper part of the rotary drum 210. The transformers 251, 252 provide signal transmission between the magnetic head 1001 and the sub circuit board 253 in a non-contact manner. Accordingly, data reproduced or to be recorded by the magnetic head 1001 can be transmitted through the respective transformers 251, 252.

To connect the coil 1000 of the rotary transformer 252 to the magnetic head 1001, a linking hole 215 vertically penetrates the rotary drum 210. As shown in Figures 3A to3C, a pair of linking holes 215 are symmetrically formed at the right and the left sides with respect to the magnetic head 1001. The coil 1000 is passed through the linking holes 215 and is directly connected to the magnetic head 1001 by soldering. As a result, in the case where a pair of magnetic heads 1001 employed, a total of four soldering steps are performed; two soldering steps for each coil 1000 of each magnetic head 1001. The surface of the coil 1000 is coated with enamel, to provide electrical insulation. In order to prevent the coating from peeling off by contact with the rotary drum 210, the upper/lower entry/exit parts or mouths 215a, 215b of the linking holes 215 are preferably rounded. By having the entry and exit parts 215a, 215b rounded, instead of angular, the peeling-off of the coating layer of the coil 1000 by the contact can be prevented.

A motor stator 270 is disposed in the upper part of the stationary drum 220, and a motor rotor 260 is disposed in the lower surface of the rotary drum 210, to oppose the motor stator 270 and thereby result in rotation. The motor rotor 260 has a doughnut-shaped magnet 262 disposed inside a ring-type rotor casing 261.

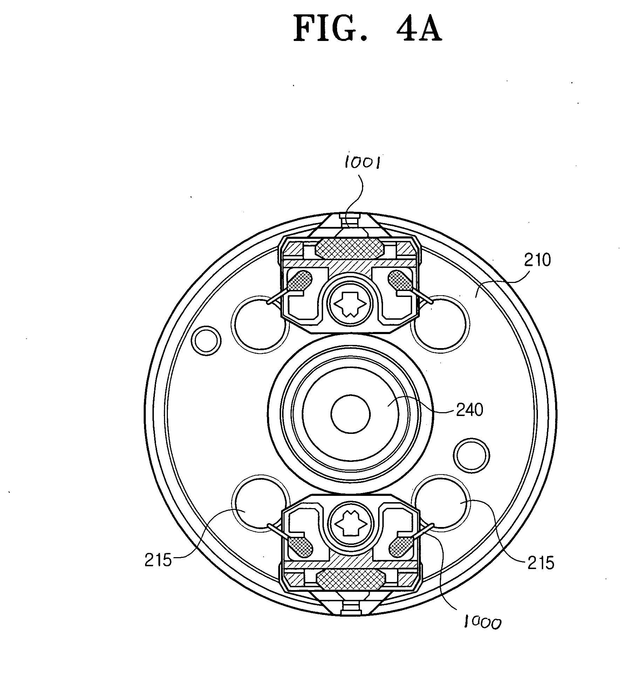

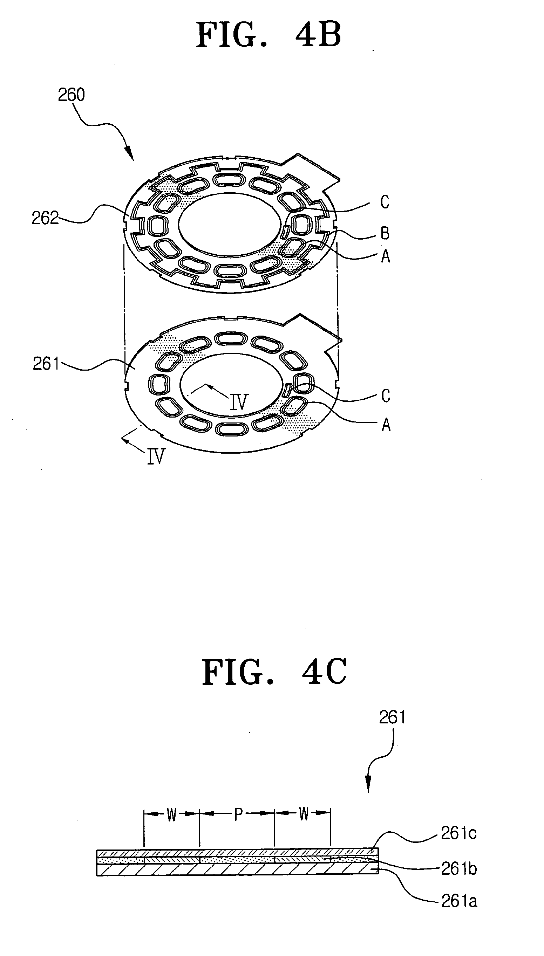

The motor stator 270 is of the so-called "FP (fine pattern) coil" type, in which there is formed into a disc pattern facing the donut-type magnet 162, which results in a more compact head drum assembly. As shown in Figure 4B, the motor stator 270 has a two-layered structure consisting of a lower substrate 261 and an upper substrate 262 stacked one above the other. In the upper and the lower substrates 262, 261, there are a torque generation coil pattern (A), a frequency generation coil pattern (B) for speed control and a phase generation coil pattern (C) for phase control, formed in the shapes illustrated and in cooperating with one another.

As shown in Figure 4B, the torque generation coil pattern (A) and the phase generation coil (PG) pattern (C) for phase control are formed dispersed on the upper and the lower substrates 262, 261, while the frequency generation (FG) coil pattern (B) for speed control is formed only on the upper substrate 262.

In another embodiment of the invention, not shown, a predetermined torque generation coil pattern is formed dispersed on the upper and the lower substrates 262, 261, and the PG coil pattern (C) is formed on one of the substrates 262, 261, and the FG coil pattern (B) is formed on the other substrate 262, 261. Additionally, various other combinations of the patterns are also possible.

As shown in Figure 4C, each of the upper and the lower substrates 262, 261 preferably is formed by coating a copper membrane 261b of a predetermined fine pattern on an epoxy substrate 261 a, which acts as a base plate, and forming a protective layer 261c thereon. The copper layer 261b may be formed in width (W) from at or about 10 µ*m* to at or about 20 µ*m*, and the pitch (P) between the respective copper layers 261b ranges from at or about 90 µ*m* to at or about 100 µ*m*.

It will be appreciated by those skilled in the art that the invention is not limited to the described preferred embodiments, but that various changes and modifications can be made within the scope of the invention as defined by the claims.

## Claims

**1.** A head drum assembly for a tape recorder, the assembly comprising:
a rotary drum (210) supporting a magnetic head (1001) and rotatable on a shaft (240);
a stationary drum (220) and a drum cover (230) secured to the shaft on opposite sides of the rotary drum, the drum cover supporting a circuit board (253);
a stationary transformer (251) and a rotary transformer (252), disposed between the stationary drum and the rotary drum, for transmitting signals between the magnetic head and the circuit board,
**characterised in that** the drum cover (230) is formed of a conductive material, and a connecting member (1002) is disposed to support the circuit board (253) on the drum cover and to connect electrically the circuit board and the drum cover.

**2.** An assembly according to claim 1, wherein the drum cover is formed of the same material as the rotary drum, and preferably also the stationary drum.

**3.** An assembly according to claim 1 or claim 2, wherein the connecting member is a screw (1002) extended through coupling holes (253a, 230a) in the drum cover and the circuit board.

**4.** An assembly according to any preceding claim, wherein the rotary drum has a linking hole (215) penetrating therethrough, and a coil (1000) of the rotary transformer extends through the linking hole and is directly soldered to the magnetic head.

**5.** An assembly according to claim 4, wherein mouths (215a, 215b) of the linking hole are rounded.

**6.** An assembly according to claim of claim 4 or claim 5, wherein the linking hole is symmetrical with respect to the magnetic head.

**7.** An assembly according to any preceding claim, further comprising a motor stator (270) mounted with the stationary drum; and a motor rotor (260) mounted with the rotary drum, wherein the motor stator (270) has first and second substrates (261, 262), and each of a torque generation coil pattern (A), a frequency generation coil pattern (B) and a phase generation coil pattern (C) is formed on one or both of the substrates.

**8.** An assembly according to claim 7, wherein the torque generation coil pattern is formed on both the substrates, and the phase generation coil pattern is formed on an opposite substrate to the substrate having formed thereon the frequency generation coil pattern.

**9.** An assembly according to claim 7, wherein the torque generation coil pattern and the phase generation coil pattern are each formed on both the substrates, and the frequency generation coil pattern is formed on only one substrate.

**10.** An assembly according to any of claims 7 to 9, wherein each of the upper and the lower substrates includes a copper layer in a predetermined pattern formed on a base plate, and a protective layer formed on the copper layer, and the copper layers of the substrates are connected to each other through a hole formed in one substrate.

**10.** An assembly according to claim 10, wherein the copper layer is formed with a track width between about 10 µ*m* and about 20 µ*m*, and a pitch between the copper tracks is between about 90 µ*m* and about 100 µ*m*.

**11.** A head drum assembly for a tape recorder, the assembly comprising:
a rotary drum (210) supporting a magnetic head (1001) thereon and being rotatable on a shaft (240); and
a rotary transformer (252) disposed on the rotary drum,
**characterised in that** the rotary drum has a linking hole (215) penetrating therethrough, and a coil (1000) of the rotary transformer extends through the linking hole and is directly connected to the magnetic head by soldering.

**12.** An assembly according to claim 11, wherein mouths (215a, 215b) of the linking hole are rounded.

**13.** An assembly according to claim 11 or claim 12, wherein the linking hole is symmetrical with respect to the magnetic head.

**14.** An assembly according to claim 11 to 13, further comprising:
a stationary drum (220) secured to the shaft on an opposite side of the rotary drum to the drum cover, and
a motor stator (270) mounted with the stationary drum; and a motor rotor (260) mounted with the rotary drum, wherein the motor stator (270) has first and second substrates (261, 262), and each of a torque generation coil pattern (A), a frequency generation coil pattern (B) and a phase generation coil pattern (C) is formed on one or both of the substrates.

**15.** An assembly according to claim 14, wherein the torque generation coil pattern is formed on both the substrates, and the phase generation coil pattern is formed on an opposite substrate to the substrate having formed thereon the frequency generation coil pattern.

**16.** An assembly according to claim 14, wherein the torque generation coil pattern and the phase generation coil pattern are each formed on both the substrates, and the frequency generation coil pattern is formed on only one substrate.

**17.** An assembly according to any of claims 14 to 16, wherein each of the upper and the lower substrates includes a copper layer in a predetermined pattern formed on a base plate, and a protective layer formed on the copper layer, and the copper layers of the substrates are connected to each other through a hole formed in one substrate.

**18.** An assembly according to claim 17, wherein the copper layer is formed with a track width between about 10 µ*m* and about 20 µ*m*, and a pitch between the copper tracks is between about 90 µ*m* and about 100 µ*m*.

**19.** A head drum assembly for a tape recorder, comprising:
a rotary drum (210) and a stationary drum (220) secured onto a shaft (240); and
a motor stator (270) mounted with the stationary drum; and a motor rotor (260) mounted with the rotary drum,
**characterised in that** the motor stator (270) has first and second substrates (261, 262), and each of a torque generation coil pattern (A), a frequency generation coil pattern (B) and a phase generation coil pattern (C) is formed on one or both of the substrates.

**20.** An assembly according to claim 19, wherein the torque generation coil pattern is formed on both the substrates, and the phase generation coil pattern is formed on an opposite substrate to the substrate having formed thereon the frequency generation coil pattern.

**21.** An assembly according to claim 19, wherein the torque generation coil pattern and the phase generation coil pattern are each formed on both the substrates, and the frequency generation coil pattern is formed on only one substrate.

**22.** An assembly according to any of claims 19 to 21, wherein each of the upper and the lower substrates includes a copper layer in a predetermined pattern formed on a base plate, and a protective layer formed on the copper layer, and the copper layers of the substrates are connected to each other through a hole formed in one substrate.

**23.** An assembly according to claim 22, wherein the copper layer is formed with a track width between about 10 µ*m* and about 20 µ*m*, and a pitch between the copper tracks is between about 90 µ*m* and about 100 µ*m*.

**24.** A head drum assembly for a tape recorder, comprising:
a rotary drum supporting a magnetic head thereon, and being rotatably disposed on a shaft;
a stationary drum and a drum cover secured to the shaft to be positioned vertically on lower and upper parts of the rotary drum with the rotary drum being interposed therebetween;
a sub circuit board, a stationary transformer and a rotary transformer, each being disposed between the stationary drum and the rotary drum for signal transmission with the magnetic head;
a motor stator mounted on the stationary drum; and
a motor rotor disposed in the rotary drum to oppose the motor stator and rotate, wherein
the drum cover is formed of a conductive material and press-fitted on the shaft, and a connecting member is disposed on the conductive body of the drum cover for supporting and electrically connecting the sub circuit board with the conductive body.

**25.** The head drum assembly of claim 24, wherein the drum cover is formed of the same material as that of the rotary drum and the stationary drum.

**26.** The head drum assembly of claim 24, wherein the connecting member is a screw fastened to coupling holes which are respectively formed in the drum cover and in the sub circuit board to correspond to each other.

**27.** The head drum assembly of claim 24, wherein the rotary drum has a linking hole vertically penetrating therein, and a coil of the rotary transformer is passed through the linking hole and directly connected to the magnetic head by soldering.

**28.** The head drum assembly of claim 27, wherein an entry part and an exit part at the upper and the lower parts of the linking hole are rounded.

**29.** The head drum assembly of claim 27, wherein the linking hole is formed symmetrically with respect to the magnetic head.

**30.** The head drum assembly of claim 27, wherein the motor stator is formed in a two-layered structure having a lower substrate and an upper substrate stacked on the lower substrate, and combinations of a torque generation coil pattern, a frequency generation coil pattern for speed control and a phase generation coil pattern for phase control are formed on the upper and the lower substrates, respectively.

**31.** A head drum assembly for a magnetic recording/reproducing apparatus, comprising:
a rotary drum supporting a magnetic head thereon, and being rotatably disposed on a shaft; and
a rotary transformer disposed on the rotary drum, wherein
the rotary drum has a linking hole vertically penetrating therein, and a coil of the rotary transformer is passed through the linking hole to be directly connected to the magnetic head by soldering.

**32.** The head drum assembly of claim 31, wherein an entry part and an exit part at the upper and the lower parts of the linking hole are rounded.

**33.** The head drum assembly of claim 31, wherein the linking hole is formed symmetrically with respect to the magnetic head.

**34.** The head drum assembly of claim 31, further comprising:
a stationary drum which is positioned below the rotary drum and attached to the shaft; and
a motor rotor and a motor stator disposed above and below the rotary drum and above the stationary drum, respectively,
wherein the motor stator is formed in a two-layered structure having a lower substrate and an upper substrate stacked on the lower substrate, and combinations of a torque generation coil pattern, a frequency generation coil pattern for speed control and a phase generation coil pattern for phase control are formed on the upper and the lower substrates, respectively.

**35.** A head drum assembly for a tape recorder, comprising:
a rotary drum and a stationary drum press-fitted to upper and lower parts of a shaft, respectively; and
a motor rotor attached to the rotary drum to oppose a motor stator which is disposed on the stationary drum and rotate,
wherein the motor stator is formed in a two-layered structure having a lower substrate and an upper substrate stacked on the lower substrate, and combinations of a torque generation coil pattern, a frequency generation coil pattern for speed control and a phase generation coil pattern for phase control are formed on the upper and the lower substrates, respectively.

**36.** The head drum assembly of claim 35, claim 30, claim 24 or claim 34, wherein the torque generation coil pattern is formed dispersely on the upper and the lower substrates, and the phase generation coil pattern for phase control is formed on one of the upper and the lower substrates and the frequency generation coil pattern for speed control is formed on the other.

**37.** The head drum assembly of claim 35, claim 30, claim 24 or claim 34, wherein the torque generation coil pattern and the phase generation coil pattern are formed dispersely on the upper and the lower substrates, and the frequency generation coil pattern is formed on the upper substrate.

**38.** The head drum assembly of claim 35, claim 30, claim 24 or claim 34, wherein each of the upper and the lower substrates has a copper layer in a predetermined pattern which is formed on a base plate, and a protective layer formed on the copper layer, and the copper layers of the upper and the lower substrates are connected with each other through a passing hole formed in the upper substrate.

**39.** The head drum assembly of claim 38, wherein the copper layer is formed in width from about 10 µ*m* to about 20 µ*m*, and a pitch between the respective copper layers ranges from about 90 µ*m* to about 100 µ*m*.
